# FASCICULE DE BREVET EUROPEEN

(11) **EP 0 593 325 B1**
(45) Date de publication et mention de la délivrance du brevet: **16.07.1997**
(21) Numéro de dépôt: 93402329.2
(22) Date de dépôt: 23.09.1993
(51) Int. Cl.: F16L 41/12, F16L 19/02, F16L 19/025

(54) **Raccord pour joint torique**
Verbindung für einen Dichtring
Coupling for a sealing ring

(30) Priorité: 16.10.1992 FR 9212669
(43) Date de publication de la demande: 20.04.1994
(73) Titulaire: AUTOMOBILES PEUGEOT, 75116 Paris (FR); AUTOMOBILES CITROEN, 92200 Neuilly-sur-Seine (FR)
(72) Inventeur: Pellerin, Jean-Philippe, F-91190 Gif Sur Yvette (FR)
(74) Mandataire: Robert, Jean-François

(56) Documents cités:
- FR-A- 1 419 246
- GB-A- 2 207 722
- US-A- 3 218 093
- US-A- 3 929 358

## Description

La présente invention a pour objet un raccord destiné à assurer la fixation d'un tuyau présentant un bourrelet annulaire dans un perçage d'une pièce. Ce raccord comprend :
- un embout fileté monté sur le tuyau d'un côté du bourrelet et apte à se visser dans ledit perçage; et
- un joint monté sur le tuyau de l'autre côté du bourrelet et apte à être appliqué contre une partie dudit perçage par vissage de l'embout. Le document US-A-3218093 décrit un raccord de ce type mais dans lequel l'embout fileté se visse dans une pièce élastiquement déformable, provoquant simultanément le verrouillage de l'ensemble par mise en tension de cette pièce et l'application du joint autour du perçage. Le raccord selon l'invention est défini par les caractéristiques de la revendication 1.

On a décrit ci-après, à titre d'exemples non limitatives, deux modes de réalisation du raccord selon l'invention avec référence aux dessins annexés dans lesquels :
La Figure 1 est une vue en coupe axiale d'un premier mode de réalisation,
La Figure 2 est une vue en coupe axiale d'un second mode de réalisation.

Tel qu'il est représenté aux dessins, le raccord est destiné à la fixation d'un tuyau 1 dans le perçage 2 d'une pièce 3.

Le tuyau 1 présente un bourrelet annulaire 1a de section en V ou biconique . Un embout fileté 4, dont le diamètre intérieur est plus grand que le diamètre extérieur du tuyau 1, peut être vissé dans le perçage 2 de façon à presser sur le bourrelet 1a. Une bague d'appui 5 et un joint 6 sont interposés entre le bourrelet 1a et un épaulement 2a du perçage 2.

Le diamètre extérieur de la bague 5 est inférieur au diamètre interne du perçage 2 afin de ménager un jeu radial. Sur sa face tournée vers le bourrelet 1a, la bague 5 présente un pan coupé 5a parallèle à la face du bourrelet située en regard.

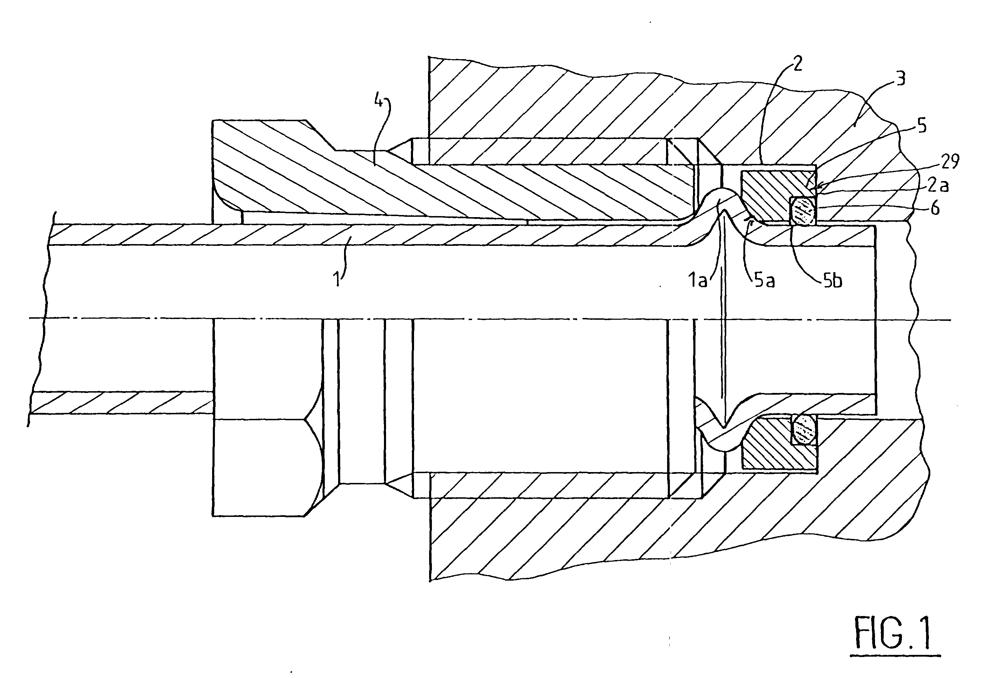

Dans le mode de réalisation de la Figure 1,les deux faces du bourrelet ont même pente et la bague 5 comporte une gorge 5b dans laquelle le joint 6 est logé et qui se trouve en regard de l'épaulement 2a de sorte que le joint est pressé contre cet épaulement lors du vissage de l'embout 4 dans le perçage 2 de la pièce 3, ce qui assure l'étanchéité. La gorge 5b est rectangulaire et l'épaulement 2a est perpendiculaire à l'axe du perçage 2.

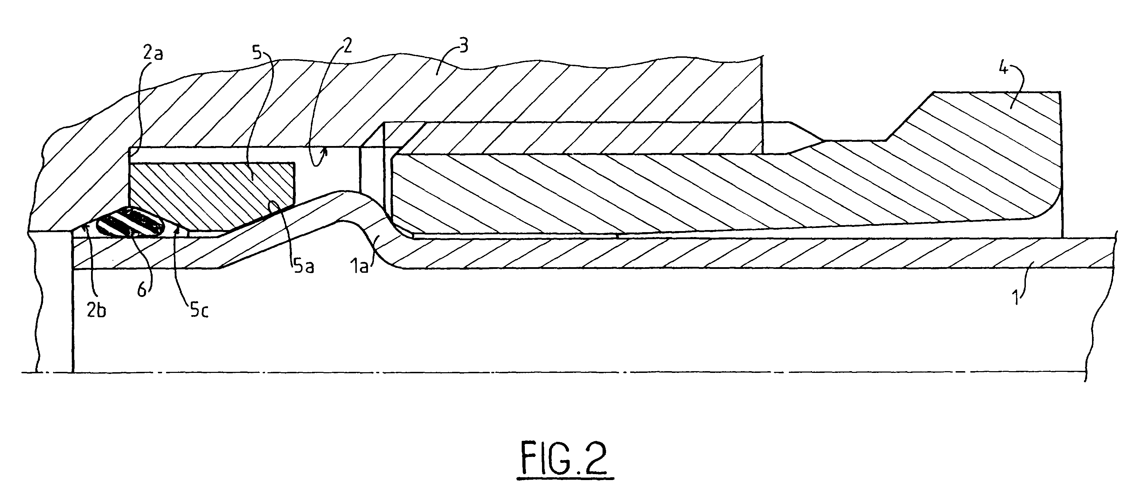

Dans le mode de réalisation de la Figure 2 les deux faces du bourrelet 1a ont des pentes différentes ; la bague 5 présente une face inclinée 5c sur sa paroi opposée au bourrelet 1a et le perçage 2 comporte une face inclinée 2b qui prolonge l'épaulement 2a et dont la pente est opposée à celle de la face 5c, mais a la même valeur qu'elle; le joint 6 est ainsi comprimé, lors du serrage de la vis 4, entre ces faces 5c et 2b et le tuyau 1. La bague est symétrique par rapport à un plan perpendiculaire à son axe, ses faces 5a et 5c ayant des pentes de même valeur, mais de sens opposés, ce qui évite des erreurs de montage.

Les raccords qui viennent d'être décrits sont fiables aussi bien pour l'étanchéité grâce au joint torique 6 que pour la tenue mécanique grâce à l'assemblage élastique dû à la forme en V du bourrelet 1a. Les écarts de position entre le perçage 2 et le tube 1 sont rattrapés par le jeu radial de la bague 5. Le raccord est facile à monter, la bague 5 et son joint 6 étant mis en place sur le tuyau 1 avant la connection de celui-ci sur la pièce 3.

Il va de soi que la présente invention ne doit pas être considérée comme limitée aux modes de réalisation décrits et représentés, mais en couvre, au contraire, toutes les variantes définies dans les revendications. C'est ainsi, en particulier, que le joint 6 pourrait être remplacé par du caoutchouc adhérisé sur la bague d'appui 5. Les deux faces du bourrelet 1a peuvent avoir des pentes égales comme à la Figure 1 ou bien des pentes différentes comme à la Figure 2. Enfin, dans le mode de réalisation de la figure 2, la pente 2b n'est pas indispensable : la forme du perçage à cet endroit peut être quelconque pourvu qu'il y ait la place nécessaire pour le joint.

## Revendications

1. Raccord destiné à assurer la fixation d'un tuyau (1) présentant un bourrelet annulaire (1a), dans un perçage (2) d'une pièce (3), comprenant :
- un embout fileté (4) monté sur le tuyau (1) d'un côté du bourrelet (1a) et apte à se visser dans ledit perçage (2);
- un joint (6) monté sur le tuyau (1) de l'autre côté du bourrelet (1a) et apte à être appliqué contre une partie (2a ou 2b) dudit perçage par vissage de l'embout; et
- une bague (5) qui est montée sur le tuyau (1) entre le bourrelet (1a) et le joint (6), en étant propre à venir au contact à la fois avec le bourrelet et ce joint, et par l'intermédiaire de laquelle le bourrelet (1a) écrase le joint (6) lors du vissage de l'embout (4).

2. Raccord selon la revendication 1,
caractérisé en ce que la bague (5) est montée sur le tuyau (1) avec un jeu radial.

3. Raccord selon la revendication 1 ou 2,
caractérisé en ce que la bague (5) présente une face (5a) conformée au profil du bourrelet (1a).

4. Raccord selon l'une des revendications 1 à 3,
caractérisé en ce que le joint 6 est une pièce indépendante de la bague (5).

5. Raccord selon l'une des revendications 1 à 3,
caractérisé en ce que le joint est adhérisé à la bague.

6. Raccord selon l'une des revendications 1 à 4,
caractérisé en ce que la bague (5) comporte une gorge (5b) pour le logement du joint.

7. Raccord selon la revendication 6,
caractérisé en ce que la gorge (5b) se trouve en regard de l'épaulement (2a).

8. Raccord selon la revendication 7,
caractérisé en ce que la gorge (5b) est rectangulaire et que l'épaulement (2a) est perpendiculaire à l'axe du perçage (2).

9. Raccord selon l'une des revendications 1 à 5,
caractérisé en ce que la bague (5) présente une face inclinée (5c) contre laquelle le joint (6) est disposé.

10. Raccord selon la revendication 9,
caractérisé en ce que la bague (5) est symétrique par rapport à un plan perpendiculaire à son axe, sa face inclinée (5c) et sa face (5a) en contact avec le bourrelet ayant des pentes égales et de signes opposés.

11. Raccord selon la revendication 9 ou 10,
caractérisé en ce que le perçage (2) présente une face inclinée (2b) dont la pente est de signe opposé à celle de la face (5c) de la bague.

12. Raccord selon l'une des revendications 1 à 11,
caractérisé en ce que le bourrelet a une forme en V, ses deux faces ayant même pente.

13. Raccord selon l'une des revendications 1 à 11,
caractérisé en ce que le bourrelet a une forme en V, ses deux faces ayant des pentes différentes.

## Patentansprüche

1. Kupplung, die dazu bestimmt ist, die Befestigung eines Rohres (1), das einen Ringwulst (1a) aufweist, in einer Bohrung (2) eines Teils (3) sicherzustellen, mit:
- einer Gewindemuffe (4), die auf dem Rohr (1) auf der einen Seite des Wulstes (1a) angebracht ist und zum Einschrauben in die genannte Bohrung (2) eingerichtet ist;
- einer Dichtung (6), die auf dem Rohr (1) auf der anderen Seite des Wulstes (1a) angebracht ist und dazu eingerichtet ist, gegen einen Teil (2a oder 2b) der genannten Bohrung durch Festschrauben der Muffe angedrückt zu werden; und
- einem Ring (5), der auf dem Rohr (1) zwischen dem Wulst (1a) und der Dichtung (6) angebracht ist und dazu eingerichtet ist, gleichzeitig mit dem Wulst und dieser Dichtung in Berührung zu gelangen, und durch dessen Zwischenwirkung der Wulst (1a) die Dichtung (6) während des Festschraubens die Muffe (4) breitdrückt.

2. Kupplung nach Anspruch 1,
dadurch gekennzeichnet, daß de Ring (5) auf dem Rohr (1) mit Radialspiel angebracht ist.

3. Kupplung nach Anspruch 1 oder 2,
dadurch gekennzeichnet, daß der Ring (5) eine Fläche (5a) aufweist, die mit dem Profil des Wulstes (1a) übereinstimmt.

4. Kupplung nach einem der Ansprüche 1 bis 3,
dadurch gekennzeichnet, daß die Dichtung (6) ein vom Ring (5) unabhängiges Teil ist.

5. Kupplung nach einem der Ansprüche 1 bis 3,
dadurch gekennzeichnet, daß die Dichtung am Ring angeheftet ist.

6. Kupplung nach einem der Ansprüche 1 bis 4,
dadurch gekennzeichnet, daß der Ring (5) eine Nut (5b) für den Sitz der Dichtung aufweist.

7. Kupplung nach Anspruch 6,
dadurch gekennzeichnet, daß die Nut (5b) der Schulter (2a) gegenüberliegt.

8. Kupplung nach Anspruch 7,
dadurch gekennzeichnet, daß die Nut (5b) rechteckig ist, und daß die Schulter (2a) senkrecht zur Achse der Bohrung (2) steht.

9. Kupplung nach einem der Ansprüche 1 bis 5,
dadurch gekennzeichnet, daß der Ring (5) eine geneigte Fläche (5c) aufweist, gegen welche die Dichtung (6) angesetzt ist.

10. Kupplung nach Anspruch 9,
dadurch gekennzeichnet, daß der Ring (5) in Bezug auf eine zu seiner Achse senkrechte Ebene symmetrisch ist, und daß seine geneigte Fläche (5c) und seine in Berührung mit dem Wulst befindliche Fläche (5a) gleiche Steigungen mit entgegengesetzten Vorzeichen aufweisen.

11. Kupplung nach Anspruch 9 oder 10,
dadurch gekennzeichnet, daß die Bohrung (5) eine geneigte Fläche (2b) aufweist, deren Neigung ein entgegengesetztes Vorzeichen zu dem der Fläche (5c) des Ringes aufweist.

12. Kupplung nach einem der Ansprüche 1 bis 11,
dadurch gekennzeichnet, daß der Wulst V-förmig ist und seine beiden Flächen die gleiche Neigung aufweisen.

13. Kupplung nach einem der Ansprüche 1 bis 11,
dadurch gekennzeichnet, daß der Wulst V-förmig ist und seine beiden Flächen unterschiedliche Neigungen aufweisen.

## Claims

1. Coupling intended to ensure the fastening of a pipe (1) having an annular flange (1a), in a bore hole (2) of a part (3), comprising:
- a threaded end piece (4) mounted on the pipe (1) on one side of the flange (1a) and capable of being screwed into said bore hole (2);
- a seal (6) mounted on the pipe (1) on the other side of the flange (1a) and capable of being applied against a part (2a or 2b) of said bore hole by screwing in the end piece; and
- a ring (5) which is mounted on the pipe (1) between the flange (1a) and the seal (6), while being suitable to come into contact both with the flange and this seal, and via which the flange (1a) crushes the seal (6) when the end piece (4) is screwed in.

2. Coupling according to Claim 1,
characterised in that the ring (5) is mounted on the pipe (1) with radial play.

3. Coupling according to Claim 1 or 2,
characterised in that the ring (5) has one face (5a) shaped to the profile of the flange (1a).

4. Coupling according to one of Claims 1 to 3,
characterised in that the seal 6 is a part independent of the ring (5).

5. Coupling according to one of Claims 1 to 3,
characterised in that the seal is bonded to the ring.

6. Coupling according to one of Claims 1 to 4,
characterised in that the ring (5) has a groove (5b) for the housing of the seal.

7. Coupling according to Claim 6,
characterised in that the groove (5b) is located facing the shoulder (2a).

8. Coupling according to Claim 7,
characterised in that the groove (5b) is rectangular and that the shoulder (2a) is perpendicular to the axis of the bore hole (2).

9. Coupling according to one of Claims 1 to 5,
characterised in that the ring (5) has an inclined face (5c) against which the seal (6) is arranged.

10. Coupling according to Claim 9,
characterised in that the ring (5) is symmetrical relative to a plane perpendicular to its axis, its inclined face (5c) and its face (5a) in contact with the flange having gradients that are equal and of opposite signs.

11. Coupling according to Claim 9 or 10,
characterised in that the bore hole (2) has an inclined face (2b), the gradient of which is of the opposite sign to that of the face (5c) of the ring.

12. Coupling according to one of Claims 1 to 11,
characterised in that the flange is V-shaped, its two faces having the same gradient.

13. Coupling according to one of Claims 1 to 11,
characterised in that the flange is V-shaped, its two faces having different gradients.
